# EUROPEAN PATENT APPLICATION

(11) **EP 2 058 215 A2**
(43) Date of publication of application: **13.05.2009**
(21) Application number: 08380313.0
(22) Date of filing: 07.11.2008
(51) Int. Cl.: B62D 65/14, B62D 25/14, B60R 13/02

(54) **Dashboard for automotive vehicles**

(30) Priority: 08.11.2007 ES 200702306 U
(71) Applicant: Seat, S.A., 08760 Martorell (ES)
(72) Inventor: Martos Ortega, Antonio, 08760 - Martorell - Barcelona (ES); Guardia Munuera, Antonio, 08760 - Martorell - Barcelona (ES); Del Campo Melgarejo, Luis, 08760 - Martorell - Barcelona (ES)
(74) Representative: Carvajal y Urquijo, Isabel

(57) **Abstract**

The invention relates to a dashboard for automotive vehicles, comprising a framework (1), which is fixed to the structure of the vehicle, and at least two consecutive cover panels, with coinciding adjacent edges. The framework (1) and panels have relative positioning means (13,6;15,16) between them comprising centring devices shaped in the framework (1), female support elements (6;16) shaped in one of the panels, and male support elements (13;15) shaped in the other panel: the centring devices and female and male support elements (6,13) of which are located in coinciding number and positions in superimposable areas of the framework (1) and panels, the male and female support elements (6,13;16,15) resting on the centring devices in opposite directions. The mentioned centring devices consist of openings (6,16) shaped in the framework, which are surrounded, on the side on which the centring devices are applied, by a wall on which the male and female support elements (6,13;16,15) of the panels rest in a different direction.

## Description

### Field of the Invention

The present invention relates to a dashboard for automotive vehicles, including a framework, which is fixed to the structure of the vehicle, and at least two cover panels arranged consecutively, with coinciding adjacent edges, these panels defining the visible surface of the area covered by the same.

### Background of the Invention

Dashboards for automotive vehicles generally have the makeup set forth above, a framework which is fixed to the structure of the vehicle and at least two consecutive fixed cover panels of the framework, which allows using different materials for the panels, offering a more attractive finish or appearance. Furthermore, upon subdividing the visible surface of the dashboard into several areas of smaller dimensions, the manufacture thereof, for example by means of moulds is simpler and less expensive.

The problem that the manufacture of dashboards with the makeup set forth has lies in the fitting between consecutive panels. Due to traditional assembly systems individually for each panel, spaces or separations frequently occur which can vary throughout the life of the vehicle. Deviations in height can also occur, causing the loss of a levelled visible surface.

### Description of the Invention

The invention has the object of eliminating the problems set forth by means of a makeup of the dashboard with which an assembly of the panels is achieved reducing and maintaining the space between them and ensuring levelled visible surfaces.

For that purpose according to the invention, the framework and the panels have relative positioning means between them comprising centring devices shaped in the framework, female support elements shaped in one of the panels, and male support elements shaped in the other panel. The centring devices and female and male support elements are in coinciding number and positions in superimposable areas of the framework and panels. The areas of the panels which are superimposed overlap one another and in this position are,supported or superimposed on the corresponding area of the framework.

The male and female support elements of the panels rest or are supported on the centring devices in opposite directions, which allows securely maintaining the relative positioning between the different components, framework and panels.

With the described makeup the panels can be assembled with a maximum fit between one another and with perfect levelled surfaces, maintaining these conditions throughout the life of the vehicle.

The centring devices of the framework consist of openings which are shaped in said framework, which are surrounded, on the side on which the panels are applied, by a wall on which the female and male support elements of the panels rest in a different direction. The female elements are supported against the wall on the outer side thereof, whereas the male elements are supported on the inner side.

The female support elements consist of windows made in the panel the superimposable area of which is supported directly on the framework, i.e., it is situated in the intermediate position between the framework and the other panel. The mentioned windows are of a contour equal to the outer contour of the wall surrounding the openings of the centring devices, such that the contour of the windows will be around the contour of the wall, being supported thereon externally.

With regard to the male support elements, they consist of lugs projecting from the panels the superimposable area of which is in an outer position. The lugs are directed towards the framework and are of a contour equal to the inner contour of the wall surrounding the openings of the centring devices. With this makeup the lugs are introduced through the openings formed by the centring devices, being supported against the inner surface of the wall surrounding these openings.

With the mentioned makeup, the centring devices are embraced externally by the female support elements and internally by the male support elements.

### Brief Description of the Drawings

The features and advantages of the invention can be better understood with the following description, made with reference to the attached drawings in which a nonlimiting embodiment is shown.

In the drawings:
Figure 1 is a partial front elevational view of a dashboard, showing the framework thereof, on which two panels will be assembled, an upper panel and another lower panel, with the upper panel assembled.
Figure 2 shows a perspective view of the centring device of the framework for assembling the cases.
Figure 3 corresponds to a perspective view of detail A of Figure 1, showing the female support element of the upper panel.
Figure 4 is a partial rear perspective view of the lower panel, showing the male support element thereof.
Figure 5 is a sectioned rear perspective view of the assembly of the framework and assembled upper and lower cases.
Figure 6 shows a cross-section view of the coupling between the centring device of the framework and the female and male supports of the upper and lower panels.
Figure 7 shows a partial cross-section view of the framework and panels, showing the fixing means between them.

### Detailed Description of an Embodiment

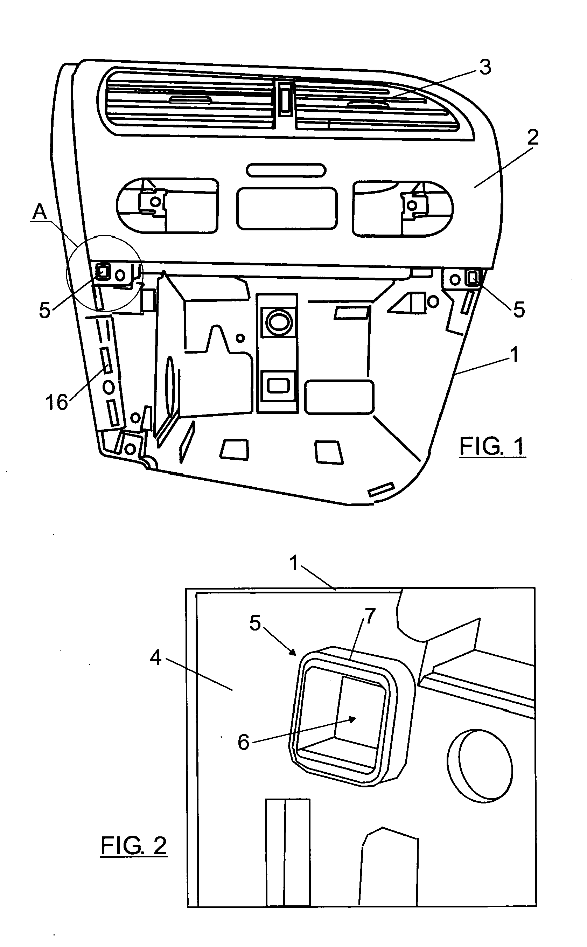

Figure 1 shows part of the framework 1 of a dashboard for vehicles on which two panels, an upper panel and another lower panel, will be coupled, of which panels the upper panel 2 is shown assembled, including the air vents 3.

For assembling the panels on the framework, said panels and framework have superimposable areas including relative positioning means between them.

Figure 2 shows area 4 of the framework 1 on which area the panels will be superimposed. In this area the corresponding positioning means consist of centring devices 5, consisting of openings 6 surrounded, on the side on which the panels will be supported, by a wall 7.

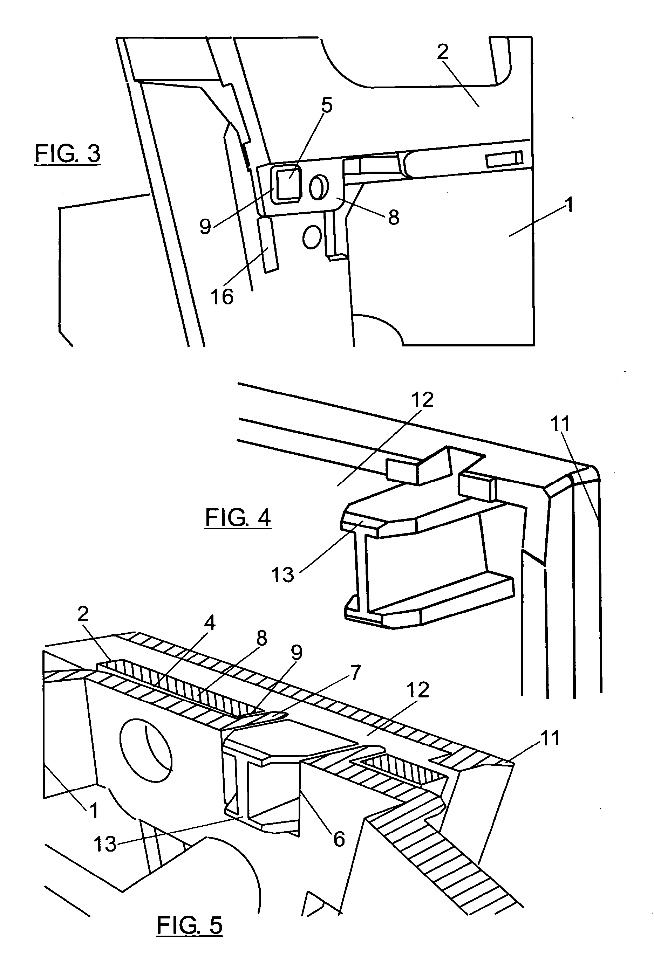

Figure 3 shows the area 8 of the panel 2 which will be superimposed on area 4 of the framework 1, Figure 2. The corresponding positioning means are located in this area 8, which means consist of female support elements made up of windows 9 made in said area, of a contour equal to the outer contour of the wall 7, Figure 2, of the centring device of the framework 1. So when superimposing the area 8 of the panel 2 on the area 4 of the framework 1, the window 9 will thus surround the wall 7 of the centring device 5.

Figure 4 shows a partial perspective view of the upper part of the panel 11, including the area 12 thereof which will be supported against the area 8 of the upper panel 2, Figure 3: This area 12 includes the corresponding positioning means, made up of a lug 13 which is directed towards the framework 1 and is of a contour equal to the inner contour of the wall 7 of the centring device 1 of said framework, Figure 2.

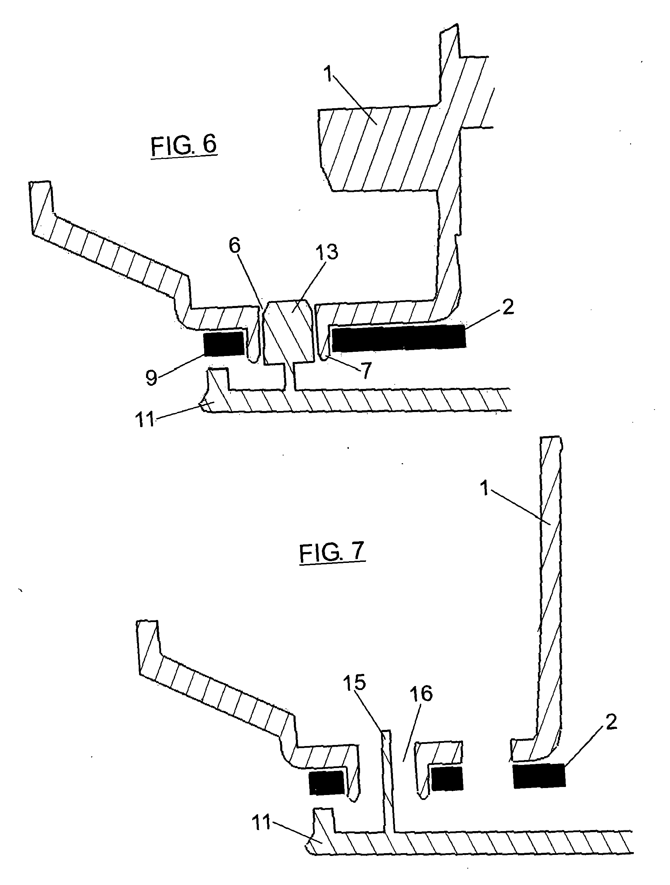

With the mentioned makeup, as shown in Figures 5 and 6, when coupling the area 8 of the upper panel 2 on the area 4 of the framework 1, the window 9 will be coupled on the wall 7 of the centring device of the framework. At the same time, when superimposing the area 12 of the lower panel 11 on the area 8 of the upper panel, the lug 13 will penetrate through the wall 7 and opening 6 of the centring device. With this makeup the female support elements of the upper panel 8, defined by the opening 9, are supported externally against the wall 7, whereas the male support elements 13 of the lower panel 11 are supported internally against said wall; this means that the male and female support elements of the panels are supported against the centring devices of the framework in a different direction which, having sized the opening 6, window 9 and lugs 13 correctly, allows maintaining the relative positioning between the panels and the framework.

Figure 7 shows the fixing system, consisting of flanges 15 projecting from the rear of the lower panel 11 and which are introduced through openings 16 of the framework, the upper panel 2 being compressed between said lower panel and the framework.

With the centring devices 5 shaped in the male and female support elements formed in the panels, the spaces between these components are secured and will be maintained constant throughout the life of the vehicle and while assembling the assembly. Levelled visible surfaces of the panels are likewise maintained once they are secured to the framework.

## Claims

1. A dashboard for automotive vehicles, comprising a framework, which is fixed to the structure of the vehicle, and at least two consecutive cover panels, with coinciding adjacent edges, **characterized in that** the framework and panels have relative positioning means between them comprising centring devices shaped in the framework, female support elements shaped in one of the panels, and male support elements shaped in the other panel: the centring devices and female and male support elements of which are located in coinciding number and positions in superimposable areas of the framework and panels, the male and female support elements resting on the centring devices in opposite directions.

2. The dashboard according to claim 1, **characterized in that** the mentioned centring devices consist of openings shaped in the framework, which are surrounded, on the side on which the centring devices are applied, by a wall on which the female and male support elements of the panels rest in a different direction.

3. The dashboard according to claims 1 and 2, **characterized in that** the female support elements consist of windows made in the panel the superimposable area of which is supported directly on the framework, said window being of a contour equal to the outer contour of the wall surrounding the openings of the centring devices.

4. The dashboard according to claim 1, **characterized in that** the male support elements consist of lugs projecting from the panel the superimposable area of which is in an outer position, said lugs being directed towards the framework and being of a contour equal to the inner contour of the wall surrounding the openings of the centring devices, to be introduced through the same and be supported against the inner surface of said wall.
